# EUROPEAN PATENT SPECIFICATION

(11) **EP 2 045 001 B1**
(45) Date of publication and mention of the grant of the patent: **28.02.2018**
(21) Application number: 07768407.4
(22) Date of filing: 06.07.2007
(51) Int. Cl.: B01D 71/02, B01D 61/36, C04B 38/00, B01D 69/10

(54) **CERAMIC FILTER**
KERAMISCHER FILTER
FILTRE CÉRAMIQUE

(30) Priority: 20.07.2006 JP 2006198250; 02.11.2006 JP 2006298552
(43) Date of publication of application: 08.04.2009
(73) Proprietor: NGK Insulators, Ltd., Nagoya-city, Aichi 467-8530 (JP)
(72) Inventor: ICHIKAWA, Akimasa, Nagoya-shi Aichi 467-8530 (JP); TOMITA, Toshihiro, Nagoya-shi Aichi 467-8530 (JP)
(74) Representative: Naylor, Matthew John
(86) International application number: PCT/JP2007/063938
(87) International publication number: WO 2008/010452

(56) References cited:
- WO-A1-00/53299
- WO-A1-2005/087355
- JP-A- 02 229 529
- JP-A- 2002 066 280
- US-A1- 2004 182 242

## Description

### Technical Field

The present invention relates to a ceramic filter for use in separation of various mixtures.

### Background Art

From viewpoints of environment and energy saving, development of a separation membrane for filtering and separating a specific gas or the like from a mixture of various gases or the like has been advanced. As such a separation membrane, a polymer film such as a polysulfone film, a silicon film, a polyamide film or a polyimide film or the like is known, but there are problems of thermal resistance and chemical resistance, for example, a problem that when the mixture includes an organic solvent, the film is degraded and deteriorated.

On the other hand, examples of the separation membrane having excellent thermal resistance and chemical stability include a carbon membrane, and a separation membrane including the carbon membrane formed on a porous base material is known. For example, Patent Document 1 discloses a molecular sieve carbon membrane in which a coating layer is formed on the surface of a ceramic porous body to form the carbon membrane so that the carbon membrane comes in close contact with the surface of the coating layer. Since a large number of pores having pore diameters of 1 nm or less are present in this molecular sieve carbon membrane, only components having a specific molecule diameter can be separated and refined from various mixed gases having different molecule diameters.
Patent Document 1: Japanese Patent No. 3647985

WO 2005/087355 describes a layer structure on a ceramic filter. A base porous body is formed from particles of preferred mean particle size 1 to 100 µm, and has a preferred mean pore size of 0.2 to 40 µm. Formed on the porous body is an intermediate layer, of particles that preferably have a mean particle size of 0.11 to 3 µm, and preferably with a smaller particle size than that of the particles forming the porous body. The intermediate layer preferably has a mean pore size of 0.05 to 1 µm. On top of the intermediate layer is a porous surface layer. That layer is formed of particles having mean particle size 0.01 to 0.11 µm and has a preferred mean pore size of 0.005 to 0.05 µm. Titania is mentioned as material for the porous surface layer. On top of that layer is formed a carbon film.

WO 00/53299 describes a porous body for use as a support of a carbon membrane. The support has a porosity less than about 5 0 µm. WO 00/53299 mentions using one or more intermediate layers between the support and the membrane when the support has porosity greater than about 0.1 µm.

US 2004/0182242 describes a supporting base for a gas separation membrane, made from sintered metal layers. One layer, on the side of the separation membrane, is made from particles to be sintered having an average particle diameter of 8 µm or less and a maximum particle diameter of 45 µm or less. The other layer, on the side of the separated gas, comprises sintered particles having a particle diameter of at least 10 µm.

JP 2002 066280 describes a carbonaceous gas separation film, which permeates only specific gases and contains 70% by weight or more carbon, formed on the surface of a ceramic porous support. An intermediate layer comprising a ceramic with a mean pore size of 1 to 10 nm is formed between the ceramic porous support and the carbonaceous gas separation film to manufacture a gas separation filter.

### Disclosure of the Invention

However, in a case where a carbon membrane is formed on a porous base material, since a carbon membrane precursor is dipped in the base material, it is difficult to form a uniform film. Therefore, the film is not uniformly formed, and hence selectivity for separating a mixture deteriorates. When the precursor is dipped to form the carbon membrane, the carbon membrane tends to be formed to be thick, and flux (transmission flux) deteriorates. Furthermore, in a method in which the surface of the porous base material is impregnated with a silica sol to form the carbon membrane on the surface as in Patent Document 1, pore diameters of the carbon membrane increase owing to the formation of the sol layer, and hence a separation performance improves with respect to a part of gases, for example, C₃H₈/C₃H₆ or the like having molecule diameters of 0.43 nm or more and a comparatively large molecular weight. However, in another industrially useful mixture having a comparatively small molecular weight, for example, CO₂/CH₄, N₂/O₂, water/EtOH or the like, the selectivity deteriorates, the flux also lowers owing to an influence of pressure loss due to the silica sol, and the separation performance remains to be low as compared with a method of directly forming the carbon membrane on the porous base material.

An objective of the present invention is to provide a ceramic filter formed on a porous base material and having satisfactory transmission amount and selectivity.

To achieve the above objective, according to the present invention, there is provided a ceramic filter as set out in claim 1. The filter has a base material main body consisting of a ceramic porous body, at least one or more ceramic surface deposited layers formed on the surface of the base material main body and consisting of a ceramic porous body having an average particle diameter smaller than that of the ceramic porous body constituting the base material main body, and a carbon membrane layer formed as a molecular sieve carbon membrane on an outermost surface of the ceramic surface deposited layer.

An average particle diameter of ceramic particles constituting the base material main body consisting of the ceramic porous body may be 10 µm or more. The average particle diameter of the ceramic surface deposited layer is 0.3 µm or more and 10 µm or less.

The ceramic filter is provided with a heterogeneous surface deposited layer formed on the surface of the ceramic surface deposited layer and having an average particle diameter smaller than that of the ceramic porous body of the ceramic surface deposited layer, and the carbon membrane layer formed on the heterogeneous surface deposited layer.

Specifically, the heterogeneous surface deposited layer may be formed of a titania sol. It may be constituted that an average pore diameter of the heterogeneous surface deposited layer is 0.3 nm or more and 20 nm or less.

An average pore diameter of the ceramic surface deposited layer is 0.01 µm or more and 3 µm or less. The ceramic surface deposited layers includes a plurality of layers having different average pore diameters.

Moreover, the base material main body may be constituted of a porous body of alumina, silica, titania, zirconia or the like. The ceramic surface deposited layer may be constituted of a porous body of alumina, silica, titania, zirconia or the like.

The ceramic filter of the present invention has a separating function of separating water and ethanol.

In the ceramic filter of the present invention, since the ceramic surface deposited layer consisting of the ceramic porous body having the average particle diameter smaller than that of the ceramic porous body constituting the base material main body is formed on the surface of the base material main body consisting of the ceramic porous body and the carbon membrane layer is formed on the ceramic surface deposited layer, increase of pressure loss at a base material portion can be prevented, and a transmission amount of a target to be separated can be improved. Moreover, since the carbon membrane layer is formed on the ceramic surface deposited layer or the heterogeneous surface deposited layer having a small average particle diameter, penetration of a film precursor resin constituting the carbon membrane layer to a base material can be inhibited. Therefore, an amount of a film precursor resin solution to be used decreases, and the carbon membrane layer can thinly and uniformly be formed on the base material.

### Brief Description of the Drawings

Fig. 1 is a schematic sectional view showing a ceramic filter and a molecular sieve carbon membrane according to the present invention;
Fig. 2 is a perspective view showing one embodiment of the ceramic filter according to the present invention;
Fig. 3 is an explanatory view showing a step of forming a ceramic surface deposited layer on the surface of a porous base material; and
Fig. 4 is an electronic microscope photograph showing a sectional shape of the ceramic filter according to the present invention.

### Description of Reference Numerals

1: a ceramic filter, 1a: an inner wall side, 1b: an outer wall side, 2: an alumina porous base material, 3: a first surface dense layer, 4: a second surface dense layer, 5: a third surface dense layer, 6: a carbon membrane layer, 12: partition walls, 13: cells, 15: an inlet side end surface, 20: a pressure container, 21: a holder and 25: a slurry.

### Best Mode for Carrying out the Invention

An embodiment of the present invention will hereinafter be described with reference to the drawings. The present invention is not limited to the following embodiment, and may be altered, modified or improved without departing from the scope of the present invention.

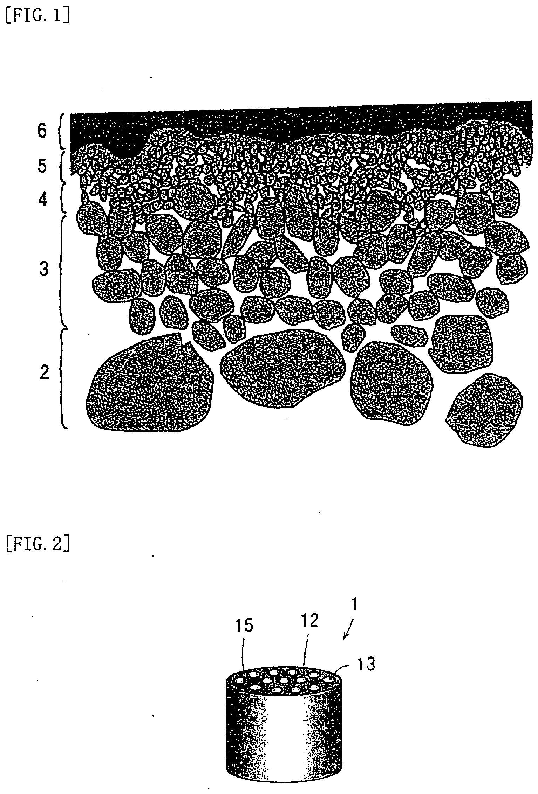

One embodiment of a ceramic filter according to the present invention will specifically be described. As shown in Fig. 1, a ceramic filter 1 of the present invention has a first surface dense layer 3 having an average pore diameter of 0.1 to 3 µm on a monolith type alumina porous base material 2 having an average particle diameter of 10 to 100 µm and an average pore diameter of 1 to 30 µm; a second surface dense layer 4 provided on the first surface dense layer 3 and having an average particle diameter smaller than that of the first surface dense layer 3 and an average pore diameter of 0.01 to 0.5 µm; and a third surface dense layer 5 provided on the second surface dense layer 4, formed of a titania sol having an average particle diameter smaller than that of the second surface dense layer 3, and having an average pore diameter of 0.3 to 20 nm. Then, a carbon membrane layer 6 as a molecular sieve carbon membrane is formed on the third surface dense layer 5. The first surface dense layer 3 and the second surface dense layer 4 correspond to a ceramic surface deposited layer, and the third surface dense layer 5 corresponds to a heterogeneous surface deposited layer.

Fig. 2 shows the whole diagram of the ceramic filter 1 as one embodiment. As shown in Fig. 2, the ceramic filter 1 of the present invention has a monolith shape having a plurality of cells 13 defined by partition walls 12 so as to form a fluid passage in an axial direction. In the present embodiment, the cells 13 have a hexagonal section, and the surface deposited layer and the molecular sieve carbon membrane shown in Fig. 1 are formed on inner wall surfaces of the cells. The cells 13 may be formed so as to have a circular section or a quadrangular section. According to such a structure, for example, when a mixture (e.g., water and ethanol) is introduced into the cells 13 from an inlet side end surface 15, one element constituting the mixture is separated in the molecular sieve carbon membrane formed on inner walls of the cells 13, passes through the porous partition walls 12, and is discharged from an outermost wall of the ceramic filter 1, so that the mixture can be separated. That is, the carbon membrane layer 6 formed at the ceramic filter 1 can be used as a molecule separation membrane, and has a high separation property with respect to, for example, water and ethanol. As the ceramic filter 1, a filter having a slit structure may be used in which for a purpose of further improving a transmission speed of a separated substance, the cells provided with sealed end surfaces are arranged at an interval of several rows without forming any carbon membrane or any surface deposited layer and in which through holes are provided between the cells and an outer wall (see Japanese Patent Application Laid-Open No. H06-99039, Japanese Patent Publication No. H06-16819, Japanese Patent Application Laid-Open No. 2000-153117, etc.).

Next, the respective layers shown in Fig. 1 will specifically be described. The porous base material 2 as a base material main body is formed as a columnar monolith type filter element formed of a porous material by extrusion or the like. As the porous material, for example, alumina may be used, because the material has a resistance to corrosion, there is little change of pore diameters of a filtering portion due to temperature change, and a sufficient strength is obtained, but instead of alumina, a ceramic material such as cordierite, mullite or silicon carbide may be used. The porous base material 2 is constituted of ceramic particles having an average particle diameter of 10 to 100 µm, for example, a sintered body of alumina particles, and includes numerous pores having an average pore diameter of 1 to 30 µm and communicating with front and back surfaces.

Next, the first surface dense layer 3 and the second surface dense layer 4 will be described. The first surface dense layer 3 and the second surface dense layer 4 are formed by a filtering film formation process using various ceramic materials such as alumina particles in the same manner as in the porous base material 2. As alumina particles to form the first surface dense layer 3, there are used particles having an average particle diameter smaller than that of the alumina particles to form the porous base material 2. As alumina particles to form the second surface dense layer 4, there are used particles having an average particle diameter smaller than that of the alumina particles to form the first surface dense layer 3. In such a constitution, the average pore diameter of the surface deposited layer decreases in stages, thereby obtaining a porous surface structure in which the carbon membrane is easily formed with little pressure loss.

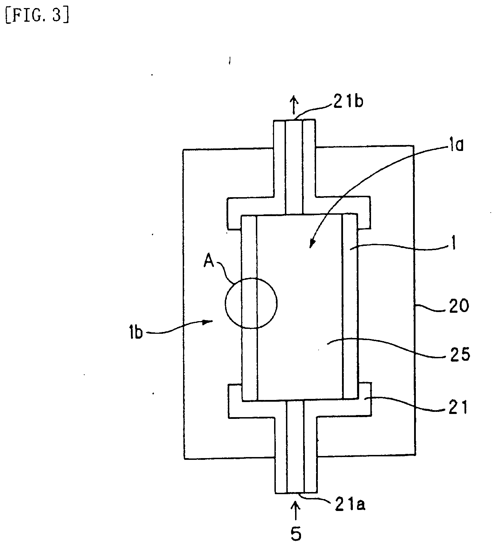

A method of forming the first surface dense layer 3 and the second surface dense layer 4 will be described. As shown in Fig. 3, the cylindrical porous base material 1 held by a holder 21 is installed in a pressure container 20. In this case, the porous base material 1 is installed so as to separate an inner wall side 1a and an outer wall side 1b thereof. Subsequently, in a state in which a pressure of the outer wall side 1b in the pressure container 20 is reduced with a pump or the like, a binder-containing slurry 25 for the first surface dense layer is allowed to flow from a slurry projection port 21a of the holder 21 into the inner wall side 1a of the porous base material 1. The slurry 25 for the first surface dense layer can be obtained by mixing aggregate particles made of the alumina particles having an average particle diameter of 0.3 to 10 µm or the like and an auxiliary sintering agent constituted of glass frit powder or the like at a predetermined ratio in a solvent such as water. In this case, a ratio of a content of a binder with respect to a content of an inorganic material constituting the slurry 25 for the first surface dense layer is preferably 2 to 10% by mass, further preferably 4 to 8% by mass. A slurry 5 for the first surface dense layer which has flowed from the inner wall side 1a of the porous base material 1 is attracted toward the outer wall side 1b and deposited on the surface of the inner wall side 1a of the porous base material 1. This is fired to form the first surface dense layer 3 having an average pore diameter of 0.1 to 3 µm.

The alumina particles having an average particle diameter of 0.03 to 1 µm are deposited on the first surface dense layer 3 by a similar filtering film formation process and fired, to form the second surface dense layer 4 having an average particle diameter of 0.03 to 1 µm and an average pore diameter of 0.01 to 0.5 µm. In consequence, the ceramic surface deposited layer is formed. It is to be noted that in the ceramic surface deposited layer, the same type of ceramic as that of the base material main body may be used, or a different type of ceramic may be used. The first surface dense layer 3 and the second surface dense layer 4 are formed as layers having different average pore diameters, but the layers may be formed so that the average pore diameter continuously changes (the average pore diameter decreases in a surface direction). Furthermore, three or more surface dense layers may be formed.

Furthermore, titania sol particles having an average particle diameter of 1 to 50 nm and including titanium oxide are deposited on the second surface dense layer 4 by a similar filtering film formation process and fired, to form the third surface dense layer 5 having an average pore diameter of 0.3 to 20 nm. Instead of titania, alumina, silica, zirconia or the like may be used.

After forming the second surface dense layer 4 or the third surface dense layer 5, the carbon membrane is formed on the second surface dense layer 4 or the third surface dense layer 5 by dipping, spin coating, spray coating or the like using a precursor solution forming the carbon membrane, and carbonized in nitrogen at 700°C to form the carbon membrane layer 6 on the surface of the second surface dense layer 4 or the third surface dense layer 5. It is to be noted that the precursor solution for forming the carbon membrane is formed by mixing or dissolving a thermosetting resin such as a phenol resin, a melamine resin, a urea resin, a furan resin, a polyimide resin or an epoxy resin, a thermoplastic resin such as polyethylene, a cellulose-based resin, or a precursor substance of such resin with an organic solvent such as methanol, acetone, tetrahydrofuran, NMP or toluene, water or the like. During film formation, the mixture or the solution may be subjected to an appropriate thermal treatment in accordance with a type of the resin. The carbonization may be performed in a reduction atmosphere of vacuum, argon, helium or the like instead of the nitrogen atmosphere. In general, when the carbonization is performed at 400°C or less, the resin is not sufficiently carbonized, and selectivity and transmission speed of the molecular sieve film deteriorate. On the other hand, when the resin is carbonized at 1000°C or more, the pore diameters contract to reduce the transmission speed.

As described above, the surface deposited layer is formed so that the average pore diameter decreases in stages, so that pressure loss of the base material itself can be suppressed, penetration of the carbon membrane precursor solution to a porous member side and formation of a composite layer are inhibited, and a film structure having a uniform thickness and only little pressure loss can be obtained. In consequence, while decrease of flux is prevented, a high separation factor can be obtained. Examples

The present invention will hereinafter be described in more detail based on examples, but the present invention is not limited to these examples.

### (Examples and Comparative Example)

As described later, there were formed a base material A having a monolith shape and consisting of an alumina porous base material, a base material B constituting a first surface dense layer formed on the base material A, a base material C constituting a second surface dense layer formed on the base material B, and a base material D constituting a third surface dense layer formed on the base material C. Furthermore, a base material E similar to the base material D was formed as a cylindrical alumina porous base material. These base materials A to E were used, and carbon membrane layers were formed on the surfaces of the base materials A to E.

Furthermore, the base materials A to E will be described in detail. The base material A is a monolith type alumina porous base material having an average particle diameter of 10 to 100 µm and an average pore diameter of 1 to 30 µm. With regard to the base material B, alumina particles having an average particle diameter of 0.3 to 10 µm were deposited on the base material A by filtering film formation, and fired to form the first surface dense layer having a thickness of 10 to 1000 µm and an average pore diameter of 0.1 to 3 µm. With regard to the base material C, alumina particles having an average particle diameter of 0.03 to 1 µm were further deposited on the surface dense layer of the base material B by the filtering film formation, and fired to form the second surface dense layer having a thickness of 1 to 100 µm and an average pore diameter of 0.01 to 0.5 µm. With regard to the base material D, titania sol particles having an average particle diameter of 1 to 50 nm were further deposited on the base material C by the filtering film formation, and fired to form the third surface dense layer having a thickness of 0.1 to 5 µm and an average pore diameter of 0.3 to 20 nm. The base material E was a cylindrical alumina porous base material prepared by a method similar to that of the base material C.

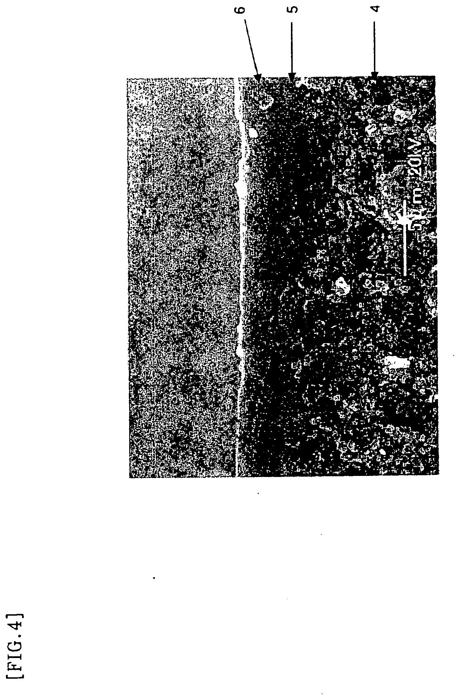

These base materials A to E were used, a precursor solution of a carbon membrane was formed into a film by a dipping process, the film was carbonized in nitrogen at 700°C, and the carbon membranes formed on the surfaces of the base materials were obtained (Comparative Example 1, Examples 1 to 4). These carbon membranes were evaluated by a water-ethanol pervaporation (test conditions: water/EtOH = 10/90 wt%, a supply liquid temperature of 75°C). An amount of the precursor solution consumed at a time when the carbon membrane was formed on each base material and a pervaporation performance are shown in Table 1. An electronic microscope photograph indicating a sectional shape of a ceramic filter of Example 3 is shown in Fig. 4.

It is to be noted that in the present invention, a value of an average pore diameter D (µm) of the base material measured by a mercury porosimetry process, a gas adsorption process or the like was used. As an average particle diameter d (µm) of ceramic particles, there was used a value of a 50% particle diameter measured by Stokes liquid layer sedimentation process, an X-ray transmission system particle size distribution measurement device (e.g., Sedigraph model, 5000-02 manufactured by Shimadzu Corporation or the like) which performs detection by an X-ray transmission process, a dynamic photo scattering process or the like.

### (Comparative Example)

A cylindrical alumina porous base material having an average pore diameter of 1 µm was dipped in a silica sol solution, and dried to obtain a base material F having the surface impregnated with a silica sol (Comparative Examples 2 and 3). In the same manner as in Examples 1 to 4, carbon membranes were formed on the surfaces of Comparative Examples 2 and 3, and the comparative examples were evaluated by a water-ethanol pervaporation (test conditions: a supply liquid composition, water/EtOH = 10/90 wt%, a supply liquid temperature of 75°C). Results are shown in Table 1.

**[Table 1].**

| | Base material | Number of dipping times | Separation factor α Water/EtOH | Full flux (kg/m²h) | Flux per volume (g/cm³) | Precursor solution consumption (g) |
|---|---|---|---|---|---|---|
| Example 1 representing a reference example | B | 3 | 23 | 1.4 | 0.52 | 6.4 |
| Example 2 representing a reference example | C | 3 | 120 | 0.8 | 0.30 | 2.4 |
| Example 3 | D | 1 | 116 | 0.8 | 0.30 | 0.8 |
| Example 4 representing a reference example | E | 3 | 115 | 0.8 | 0.08 | - |
| Comparative Example 1 | A | 5 | 1.1 | 31.0 | 11.5 | 26.6 |
| Comparative Example 2 | F | 1 | 2.1 | 0.5 | 0.05 | - |
| Comparative Example 3 | F | 3 | 18 | 0.06 | 0.006 | - |

In Comparative Example 1 in which any dense layer was not formed on the surface, a separation performance was scarcely obtained, and the carbon membrane was hardly formed on the surface of the base material. In Example 1 (reference) in which the first surface dense layer having an average pore diameter of 0.1 to 3 µm, the separation performance was obtained, but a separation factor was low. In Examples 2 and 4 (reference) in which the second surface dense layer having an average pore diameter of 0.01 to 0.5 µm was formed and Example 3 in which the third surface dense layer having an average pore diameter of 0.3 to 20 nm was formed, a high separation factor was obtained.

On the other hand, in Comparative Example 2 in which the surface of the alumina porous base material having an average pore diameter of 1 µm was impregnated with a silica sol, when dipping was performed once, a sufficient separation factor was not obtained, and further the flux was low. In Comparative Example 3 in which the dipping was performed three times, a comparatively high separation factor was obtained, but the flux largely lowered. In Example 2 (reference) having a monolith shape, the flux per volume improved as much as about four times that of Example 4 (reference) having a cylindrical shape.

The consumption of the precursor solution decreased, as the surface deposited layer became dense. In Comparative Example 1, it was confirmed that a large amount of the precursor solution of the carbon membrane was immersed into the base material. It has been presumed that since this immersion amount was excessively large, an amount of a precursor left on the surface of the base material to contribute to the film formation was insufficient, and this was a cause for a fact that any carbon membrane was not formed at a part of the surface and that a separation performance deteriorated. In Example 2 (reference), slight immersion was seen, but the carbon membrane having a film thickness of about 1 to 2 µm was uniformly formed along the base material surface layer. In Example 3, any immersion was not seen. When the dipping was performed once (with a precursor solution use amount of 1/3), a film similar to that of Example 2 (reference) was formed.

As described above, according to a deposited structure in which the alumina particles having a small average pore diameter are deposited on the base material main body, increase of pressure loss at the base material and a surface portion of the material can be reduced, so that a transmission amount can be increased. Since the dense surface layer is formed, penetration of the film precursor resin to the base material can be inhibited. Therefore, the amount of the precursor solution to be used can be reduced, and the transmission amount and selectivity can be improved. Furthermore, since the monolith shape is formed, the film area per volume can be increased, and miniaturization of a device can be realized by improvement of the flux per volume.

### Industrial Applicability

A ceramic filter of the present invention can broadly be used in an application of separation of a mixed liquid and a mixed gas.

## Claims

1. A ceramic filter (1) provided with a base material main body (2) consisting of a ceramic porous body, at least three ceramic surface deposited layers (3, 4, 5) formed on the surface of the base material main body (2) and consisting of a ceramic porous body having an average particle diameter smaller than that of the ceramic porous body constituting the base material main body (2), and a carbon membrane layer (6) formed as a molecular sieve carbon membrane on an outermost surface of the ceramic surface deposited layers (3, 4, 5), the ceramic surface deposited layers (3, 4, 5) having a first surface dense layer (3) with an average particle size of 0.3 to 10 µm and an average pore diameter of 0.1 to 3 µm and a second surface dense layer with an average particle size of 0.03 to 1 µm and an average pore diameter of 0.01 to 0.5 µm, and
wherein the filter is provided with a surface deposited layer (5) formed on the surface of the ceramic surface deposited layer (3, 4) and having an average particle diameter smaller than that of the ceramic porous body of the ceramic surface deposited layer (3, 4) and an average pore diameter of 0.3 nm or more and 20 nm or less, and the carbon membrane layer (6) formed on the surface deposited layer (5).

2. The ceramic filter (1) according to claim 1, wherein an average particle diameter of ceramic particles constituting the base material main body (2) consisting of the ceramic porous body is 10 µm or more.

3. The ceramic filter (1) according to claim 1 or 2, wherein the surface deposited layer (5) is formed of a titania sol.

4. The ceramic filter (1) according to any one of claims 1 to 3, wherein the base material main body (2) is an alumina porous body.

5. The ceramic filter (1) according to any one of claims 1 to 4, wherein the ceramic surface deposited layer (3, 4) is an alumina porous body.

6. Use of a ceramic filter (1) according to any one of claims 1 to 5, for separating water and ethanol.

7. The ceramic filter (1) according to any one of claims 1 to 5, wherein the base material main body (2) has a plurality of cells each defined by partition walls so as to form a fluid passage in an axial direction.

## Patentansprüche

1. Keramikfilter (1), der mit einem Basismaterialhauptkörper (2) ausgestattet ist, welcher aus einem porösen Keramikkörper, mindestens drei abgeschiedenen Keramikoberflächenschichten (3, 4, 5), die auf der Oberfläche des Basismaterialhauptkörpers (2) ausgebildet sind und aus einem porösen Keramikkörper bestehen, der einen mittleren Partikeldurchmesser aufweist, der kleiner als derjenige des porösen Keramikkörpers ist, der den Basismaterialhauptkörper (2) bildet, und einer Kohlenstoffmembranschicht (6), die als eine Molekularsieb-Kohlenstoffmembran auf einer äußersten Oberfläche der abgeschiedenen Keramikoberflächenschichten (3, 4, 5) ausgebildet ist, besteht, wobei die abgeschiedenen Keramikoberflächenschichten (3, 4, 5) eine erste dichte Oberflächenschicht (3) mit einer mittleren Partikelgröße von 0,3 bis 10 µm und einem mittleren Porendurchmesser von 0,1 bis 3 µm, und eine zweite dichte Oberflächenschicht mit einer mittleren Partikelgröße von 0,03 bis 1 µm und einem mittleren Porendurchmesser von 0,01 bis 0,5 µm aufweist, und
worin der Filter mit einer abgeschiedenen Oberflächenschicht (5) versehen ist, die auf der Oberfläche der abgeschiedenen Keramikoberflächenschicht (3, 4) ausgebildet ist und einen mittleren Partikeldurchmesser, der kleiner als derjenige des porösen Keramikkörpers der abgeschiedenen Keramikoberflächenschicht (3, 4) ist, und einen mittleren Porendurchmesser von 0,3 nm oder mehr und 20 nm oder weniger aufweist, und worin die Kohlenstoffmembranschicht (6) auf der abgeschiedenen Oberflächenschicht (5) ausgebildet ist.

2. Keramikfilter (1) gemäß Anspruch 1, worin ein mittlerer Partikeldurchmesser von Keramikpartikeln, welche den Basismaterialhauptkörper (2), der aus dem porösen Keramikkörper besteht, bilden, 10 µm oder mehr ist.

3. Keramikfilter (1) gemäß Anspruch 1 oder 2, worin die abgeschiedene Oberflächenschicht (5) aus einem Titandioxidsol gebildet ist.

4. Keramikfilter (1) gemäß einem der Ansprüche 1 bis 3, worin der Basismaterialhauptkörper (2) ein poröser Aluminiumoxid-Körper ist.

5. Keramikfilter (1) gemäß einem der Ansprüche 1 bis 4, worin die abgeschiedene Keramikoberflächenschicht (3, 4) ein poröser Alumiumoxid-Körper ist.

6. Anwendung eines Keramikfilters (1) gemäß einem der Ansprüche 1 bis 5 zum Trennen von Wasser und Äthanol.

7. Keramikfilter (1) gemäß einem der Ansprüche 1 bis 5, worin der Basismaterialhauptkörper (2) eine Vielzahl von Zellen aufweist, die jeweils durch Trennwände definiert sind, um so einen Fluiddurchlass in eine axiale Richtung zu bilden.

## Revendications

1. Filtre de céramique (1) muni d'un corps principal en matériau de base (2) constitué d'un corps poreux de céramique, d'au moins trois couches de céramique déposées en surface (3, 4, 5) formées sur la surface du corps principal en matériau de base (2) et constituées d'un corps de céramique poreux ayant un diamètre de particule moyen inférieur à celui du corps de céramique poreux constituant le corps principal en matériau de base (2), et d'une couche de membrane en carbone (6) formé sous la forme d'une membrane de carbone de tamis moléculaire sur une surface la plus extérieure des couches de céramique déposées en surface (3, 4, 5), les couches de céramique déposées en surface (3, 4, 5) ayant une première couche dense de surface (3) avec une taille de particule moyenne de 0,3 à 10 µm, et un diamètre de pore moyen de 0,1 à 3 µm, et une seconde couche de surface dense ayant une taille de particule moyenne de 0,03 à 1 µm, et un diamètre de port moyen de 0,01 à 0,5 µm, et
dans lequel le filtre est muni d'une couche déposée en surface (5) formée sur la surface de la couche de céramique déposée en surface (3, 4) et ayant un diamètre de particule moyen plus petit que celui du corps de céramiques poreux de la couche de céramique déposée en surface (3, 4) et un diamètre de port moyen de 0,3 nm ou plus et 20 nm au moins, et de la couche de membrane de carbone (6) formée sur la couche déposée en surface (5).

2. Filtre de céramique (1) selon la revendication 1, dans lequel un diamètre de particule moyen de particules de céramique constituant le corps principal en matériau de base (2) constitué du corps de céramique poreux est de 10 µm ou plus.

3. Filtre de céramique (1) selon la revendication 1 ou 2, dans lequel la couche déposée en surface (5) est formée d'un sol de titane.

4. Filtre de céramique (1) selon l'une quelconque des revendications 1 à 3, dans lequel le corps principal en matériau de base (2) est un corps poreux d'alumine.

5. Filtre de céramique (1) selon l'une quelconque des revendications 1 à 4, dans lequel la couche de céramique déposée en surface (3, 4) est un corps poreux d'alumine.

6. Utilisation d'un filtre de céramique (1) selon l'une quelconque des revendications 1 à 5, pour séparer de l'eau et de l'éthanol.

7. Filtre de céramique (1) selon l'une quelconque des revendications 1 à 5, dans lequel le corps principal en matériau de base (2) a une pluralité de cellules définies chacune par des parois de séparation, de manière à former un passage de fluide dans une direction axiale.
